# EUROPEAN PATENT APPLICATION

(11) **EP 1 085 075 A1**
(43) Date of publication of application: **21.03.2001**
(21) Application number: 99810824.5
(22) Date of filing: 16.09.1999
(51) Int. Cl.: C10L 3/10, B01J 19/08, B01J 7/00, B01J 12/00

(54) **Treatment of hydrogen sulfide-containing gaseous compositions**

(71) Applicant: ABB RESEARCH LTD., 8050 Zürich (CH)
(72) Inventor: Eliasson, Baldur, Dr., 5413 Birmenstorf (CH); Killer, Eric, 5430 Wettingen (CH); Kogelschatz, Ulrich, Dr., 5212 Hausen (CH)
(74) Representative: Clerc, Natalia

(57) **Abstract**

A method of treating a normally gaseous composition comprising hydrogen sulfide and at least one normally gaseous hydrocarbon, which method comprises the steps of feeding the normally gaseous composition into a reactor including a first electrode means, a second electrode means, and at least one layer of a normally solid dielectric material positioned between the first and the second electrode means; submitting the normally gaseous composition within the reactor to a dielectric barrier discharge; and controlling the dielectric barrier discharge to effect a selective conversion of a major portion, at least, of the hydrogen sulfide into hydrogen and sulfur while minimizing transformation of the at least one normally gaseous hydrocarbon.

## Description

### Background of the Invention

The present invention relates to a method of treating a normally gaseous composition comprising hydrogen sulfide and at least one normally gaseous hydrocarbon, to a method of treating a natural gas composition comprising hydrogen sulfide and at least one normally gaseous hydrocarbon, preferably methane, to a method of treating a process gas from processing of petroleum comprising hydrogen sulfide and at least one normally gaseous hydrocarbon, preferably methane, and to an apparatus for treating a normally gaseous composition comprising hydrogen sulfide and at least one normally gaseous hydrocarbon.

Hydrogen sulfide is an inflammable, at ambient conditions gaseous and very toxic compound with the chemical formula H₂S. Moreover, it is very corrosive in combination with water and, when burned, produces sulfur dioxide, which is also toxic, corrosive and suspected to cause acid rain. Regarding its natural occurrence, hydrogen sulfide is a constituent of natural gases, wherein the content of H₂S range from minor amounts, such as 1% or less, to as high as 90% depending on the geographic origin of the natural gas deposit. Natural gases containing a substantial concentration of hydrogen sulfide are referred as "sour natural gases" or "super sour natural gases" and "ultrasour natural gases" resepectively. Hydrogen sulfide is, furthermore, a large-scale by-product of petroleum desulfurization. Since the evolution and/or combustion of hydrogen sulfide creates serious environmental and safety problems its concentration has to be reduced to an acceptable level prior to evolution and/or combustion.

### Prior Art

The removal of hydrogen sulfide from gaseous streams is a problem that has long challenged many areas of industry, in particular, the petroleum industry. As a result, many different processes have been reported, such as absorption, liquid oxidation and adsorption processes.

Within the group of absorption processes gas scrubbing plays an important role. Here, hydrogen sulfide and further generally undesired sour gas components, such as carbon dioxide, are reversibly bound to solvents or absorbents-containing solutions by chemical and/or physical absorption. In the regeneration step the components are desorbed unchanged and the solvent or absorbents-containing solutions are recycled to the scrubber. An examplary process thereto is described in EP-366'206. In most cases, the desorbed hydrogen sulfide is then fed to a Claus plant. In the Claus process hydrogen sulfide is, in a first step, transformed into sulfur dioxide by oxidation, and, in a second step, the sulfur dioxide and additional hydrogen sulfide react to elemental sulfur and water by a synproportionation reaction.

The absorptive removal and separate processing of hydrogen sulfide is often too expensive, particularly when the gas stream to be treated is relatively small. In these cases liquid oxidation processes are often used, which generally involves absorption of hydrogen sulfide in alkaline solution, oxidation of dissolved hydrogen sulfide ions to elemental sulfur with simultaneous reduction of a chemical oxygen carrier and reoxidation of the active component with air. The processes are generally differentiated from each other only by the specific redox system employed. An example of a liquid oxidation process is described in US-4'637'926.

One of the major drawbacks of the Claus and the other aforementioned processes is that the hydrogen component of hydrogen sulfide is lost as water. Therefore, a process capable of dissociating hydrogen sulfide into sulfur and hydrogen would be superior, particularly, since hydrogen is needed for a variety of industrial processes and has, moreover, great value as a clean-burning fuel that can be used without causing air pollution.

Several technologies of dissociating hydrogen sulfide to produce hydrogen and elemental sulfur have been investigated. The technologies vary, in particular, the form in which the energy is supplied to the H₂S molecule to split it into hydrogen and sulfur.

While many advances have been achieved with respect to electrolysis of aqueous solutions of hydrogen sulfide, significant problems remain, however, in commercializing the process. Typically, these electrochemical processes suffer, inter alia, from side product formation in strongly alkali medium, and low hydrogen sulfide loading in acid medium.

The thermal dissociating of H₂S into H₂ and sulfur appears simple. However, like the dissociation of water, the dissociation of hydrogen sulfide is a difficult undertaking. It requires a high temperature owing to its low equilibrium constant, activation energy, and rapid quenching of reaction products to prevent the dissociation from reversing.

The use of plasma for the dissociation of hydrogen sulfide has also been described. In US-5'211'923 a method of dissociating hydrogen sulfide in a plasma reactor with microwave energies, and operating in the temperature range of about 150°C to 450°C is disclosed. In US-5'843'395, a process for recovering hydrogen and elemental sulfur from a gaseous waste stream containing hydrogen sulfide is disclosed, which process makes use of even higher temperatures, i.e. up to 1900°C, and electric energy sources for causing electromagnetic hydrodynamic and plasma conditions. The presence of gaseous hydrocarbons in the aforementioned processes are, however, tolerated only in low concentrations. Thus, the gaseous feed for these processes only include hydrocarbons at general levels of up to 1%. Typically, the gas feed needs intense precedent purification or stems from refinery or natural gas purification plants. Moreover, when minor amounts of gaseous hydrocarbons are present, they are generally destroyed as CO₂, CO, and H₂O under the reaction conditions of these processes, i.e. in particular under the high temperatures applied.

Silent gas discharges have demonstrated its suitability for large-scale industrial applications. The ozone generation, as its most important industrial application so far, is described by Eliasson et al. in IEEE Transactions on Plasma Science, Vol. 19 (1991), page 309-323 and 1063-1077 (these reports being incorporated herein for all purposes by way of reference). A characteristic of the silent discharge is the presence of a dielectric. Silent gas discharges are, therefore, also referred to as dielectric barrier discharges.

Suhr et al. have described the dissociation of hydrogen sulfide in an ozonizer-like discharge reactor at elevated temperatures, i.e. in the temperature range of 170°C-560°C (report of I. Traus and H. Suhr in Plasma Chemistry and Plasma Processing, Vol. 12 (1992), pp.275; this report being incorporated herein for all purposes by way of reference). The strong corrosiveness of H₂S combined with the high temperatures applied required, however, a double quartz wall ozonizer-type discharge reactor in order to protect the electrodes. Suhr et al. carried out over 200 experiments with such a reactor, however, none of them was directed to gaseous compositions containing H₂S and gaseous hydrocarbons.

### Objects of the Invention

Accordingly, it is an object of the present invention to provide for a method of treating a normally gaseous composition comprising hydrogen sulfide and at least one normally gaseous hydrocarbon, which method allows the selective conversion of hydrogen sulfide into elemental sulfur and hydrogen while preventing, at least in a major extent, transformation or decomposition of the at least one hydrocarbon. It is a further object of the present invention to provide for such a method which can be carried out economically, in particular at low pressures and low temperatures, preferably at ambient conditions.

It is another object of the present invention to provide for a method of treating a normally gaseous composition comprising hydrogen sulfide and at least one normally gaseous hydrocarbon, preferably methane, which method leads, in a direct manner, to a normally gaseous mixture comprising at least one hydrocarbon, preferably methane, and hydrogen.

It is a further object of the present invention to provide for a method, which allows to remove hydrogen sulfide from natural gases and, contemporaneously, to increase the calorific value of the natural gases.

It is another object of the present invention to provide for a method of economically producing hydrogen from the dissociation of hydrogen sulfide, which is contained in natural gases or in process gases from petroleum processing.

It is a further object of the present invention to provide for an economic method of purifying gases containing hydrogen sulfide as a major impurity, which method obviates the separation and the separate treatment of hydrogen sulfide and allows to purify directly the gases from hydrogen sulfide.

Another object of the present invention is to provide for an apparatus that allows the treatment of a normally gaseous composition comprising hydrogen sulfide for converting hydrogen sulfide to elemental sulfur and hydrogen at low temperatures, preferably at ambient temperatures.

Further objects and advantages of the present invention will become apparent as this specification proceeds.

### Brief Summary of the Invention

We have found that the objects can be achieved according to a first general embodiment of the invention by a method as set forth in claim 1. Accordingly, the invention provides for a method of treating a normally gaseous composition comprising hydrogen sulfide and at least one normally gaseous hydrocarbon, which method comprises the steps of feeding the normally gaseous composition into a reactor including a first electrode means, a second electrode means, and at least one layer of a normally solid dielectric material positioned between the first and the second electrode means; submitting the normally gaseous composition within the reactor to a dielectric barrier discharge; and controlling the dielectric barrier discharge to effect a selective conversion of a major portion, at least, of the hydrogen sulfide into hydrogen and sulfur while minimizing transformation of the at least one normally gaseous hydrocarbon.

In a second general embodiment the invention provides for a method of treating a natural gas composition comprising hydrogen sulfide and at least one normally gaseous hydrocarbon, preferably methane, which method comprises the steps of feeding the natural gas composition into a reactor including a first electrode means, a second electrode means, and at least one layer of a normally solid dielectric material positioned between the first and the second electrode means; submitting the natural gas composition within the reactor to a dielectric barrier discharge; and controlling the dielectric barrier discharge to effect a selective conversion of a major portion, at least, of the hydrogen sulfide into hydrogen and sulfur while minimizing transformation of the at least one normally gaseous hydrocarbon.

In a third general embodiment the invention provides for a method of treating a process gas from processing of petroleum comprising hydrogen sulfide and at least one normally gaseous hydrocarbon, preferably methane, which method comprises the steps of feeding the process gas into a reactor including a first electrode means, a second electrode means, and at least one layer of a normally solid dielectric material positioned between the first and the second electrode means; submitting the process gas within the reactor to a dielectric barrier discharge; and controlling the dielectric barrier discharge to effect a selective conversion of a major portion, at least, of the hydrogen sulfide into hydrogen and sulfur while minimizing transformation of the at least one normally gaseous hydrocarbon.

In a fourth general embodiment the invention provides for an apparatus for treating a normally gaseous composition comprising hydrogen sulfide and at least one normally gaseous hydrocarbon as set forth in claim 10.

### Definitions, Detailed Description of Preferred Embodiments and Elements of the Invention

The term "about" as used herein before any numeral implies a variation of typically ± 10%.

The term "normal" with regard to boiling points, boiling ranges, physical states of matter and the like indicates that the value is understood as being corrected for "normal conditions", i.e. a temperature of 25°C and an atmospheric pressure of 1013 mbar.

The term "layer" is used herein to refer to any planar or curved stratum having a width dimension that is substantially larger than its thickness dimension; typically, the width:thickness ratio is at least 10:1 and generally well above that value.

In the context of the present invention the term "hydrocarbons" stands for products consisting of hydrogen and carbon atoms and consisting essentially of aliphatic hydrocarbons either saturated, such as alkanes, and/or unsaturated, such as alkenes and/or alkynes.

The inventive methods remove hydrogen sulfide from normally gaseous compositions without chemically affecting, i.e. transforming or decomposing, at least in a major extent, the at least one hydrocarbon, which is further contained in the gaseous compositions. The expression "without chemically affecting at least in a major extent" as used herein means that at least 85%, preferably 90% of the at least one hydrocarbon are not transformed or decomposed in the course of the dielectric barrier discharges and pass the reactor chemically unchanged.

Moreover, the inventive methods convert selectively hydrogen sulfide into the elements, and thus, in particular, into hydrogen. Hydrogen represents a component of high value for the resulting gaseous product streams since it increases the calorific value of the product streams in the case of combustion and use as fuel gas, or it serves as reactant in the case of further processing of these product streams. Therefore, the inventive methods either satisfy demands for protection of the environment by removing hydrogen sulfide from gaseous compositions and increase contemporaneously the value of the treated gaseous compositions by producing hydrogen.

In a preferred embodiment of the present invention, the dielectric barrier discharge is controlled by maintaining a temperature of between about 10°C and about 90°C, preferably between about 20°C and about 50°C, within the reactor. Typically an operating pressure of from about 0.5 bar to about 2 bar, preferably of about 1 bar, is maintained within the reactor. Moreover, the dielectric barrier discharge reactor includes preferably two layers of the normally solid dielectric material positioned between the first and the second electrode means. Typically, at least one layer of the normally solid dielectric material is of glass or quartz.

According to a further preferred embodiment of the invention, the dielectric barrier discharge is controlled by operating it with a specific electric energy of from about 0.1 kWh/Nm³ to about 300 kWh/Nm³, preferably from about 1 kWh/Nm³ to about 50 kWh/Nm³. The specific electric energy corresponds to the electric discharge power in [kW] divided by the flow rate measured under normal conditions and given in [Nm³/h].

In another preferred embodiment of the invention, the at least one normally gaseous hydrocarbon is methane. Typically the content of the methane in the normally gaseous composition is higher than about 5 Vol.-%, preferably higher than about 10 Vol.-%. Furthermore, the normally gaseous composition comprises typically carbon dioxide.

In a further preferred embodiment of the present invention, the normally gaseous composition is typically selected from the group consisting of natural gas compositions and process gases from processing of petroleum.

Natural gases are mixtures of gaseous hydrocarbons with varying quantities of nonhydrocarbons, which are generally considered impurities. Natural gases are mainly used as fuel gases. Typically, they are composed mainly of methane and contain minor quantities of ethane, propanes and butanes, minor quantities of heavier hydrocarbons and varying amounts of gaseous nonhydrocarbons, such as hydrogen sulfide, carbon dioxide and nitrogen. However, depending from the geographic origin of the natural gas deposit, the composition varies. Thus, natural gas deposits in Alberta, Canada contain up to about 90% of hydrogen sulfide. Further deposits of those sour or super sour natural gases are, inter alia, located in Germany and in Russia.

Prior to its use as fuel gases the sour natural gases are generally cleaned of hydrogen sulfide by applying the Claus process, as already indicated above. However, the sulfur production typically represents a necessary cost in the process of recovery and refining of those sour natural gases. This is even more the case the lower the market price for sulfur and the higher the transportation costs become.

The present invention provides, now, for an inprovement of the economics of treating sour natural gases since it obviates the need of removing hydrogen sulfide and its subsequent transformation. On the contrary, the inventive method is able to directly convert hydrogen sulfide into the elements in the presence of hydrocarbons. The formation of hydrogen, while minimizing transformation or chemical reaction of the hydrocarbons, in particular of methane, increases, moreover, the calorific value of the resulting gas mixtures and improves though the economics of such a treating even more. Furthermore, the present invention is not limited or restricted to a specific content range of hydrogen sulfide within a gaseous composition but any gaseous or natural gas composition containing H₂S and at least one hydrocarbon can be treated according to the invention. Within the context of the present invention, "minimization of chemical reaction" indicates that in the course of the dielectric barrier discharge at most 15%, preferably at most 10% of the at least one hydrocarbon are decomposed or transformed in the course of the dielectric barrier discharges. Accordingly, at least 85%, preferably 90% of the hydrocarbons do not undergo a reaction characterised by a change of their chemical formulae.

The super sour gas deposits, e.g. the ones in Canada containing about 90% of H₂S, are only used for sulfur production, while methane is vented or flared. A further exploitation of those methane resources obtained after its separation from hydrogen sulfide is uneconomical due to the relatively low concentration and due to the fact that it is often still contaminated requiring further separation and purification. The present invention, now, fosters use of abundant hydrogen sulfide containing natural gases, e.g. for the use as fuel gas, since the economics of purification of methane from hydrogen sulfide is improved and the calorific value of the gaseous product stream increased, as indicated above.

Natural gases may contain larger quantities of higher hydrocarbons and can, additionally, be saturated with water vapor under natural conditions. Those natural gases are called "rich" or "wet" natural gases. The present invention is also applicable to rich or wet natural gases, and the use of those compositions is within the scope of the present invention. It is, moreover, in accordance with and within the scope of the present invention to use any waste and ex-haust gases deriving from industrial processes which gases comprise hydrogen sulfide and at least one hydrocarbon.

In a preferred embodiment of the present invention, the dielectric barrier discharge submitted to the natural gas composition is controlled by maintaining a temperature of between about 10°C and about 90°C, preferably between about 20°C and about 50°C, within the reactor. Typically an operating pressure of from about 0.5 bar to about 2 bar, preferably of about 1 bar, is maintained within the reactor.

As indicated above, hydrogen sulfide is a large-scale by-product of petroleum processing generally obtained by catalytic hydrodesulfurization. Moreover, when bitumen and/or heavy oil containing sulfur or its compounds are upgraded to synthetic crude oils, sulfur or its compounds are also removed by catalytic hydrodesulfurization. Hereby, sulfur or its compounds are converted to H₂S by the addition of hydrogen. Generally, the H₂S is then converted to elemental sulfur by a Claus process. In analogy to above-mentioned natural gas processing, the sulfur production from bitumen upgrading or petroleum refining typically represents a necessary cost for bitumen upgrading or petroleum refining. Therefore, as in the case of natural gas processing, the present invention provides for a method which directly transform process gases from petroleum processing comprising H₂S into gaseous mixtures and product streams respectively which are usable either as fuel gases of higher calorific value or in further refining processes. Alternatively, the produced hydrogen can be recovered from the resulting gaseous mixtures and used - after separation and possible purification - for further processes.

Thus, in a further preferred embodiment of the present invention, the produced hydrogen is recovered and separated from the resulting gaseous mixture and gaseous product stream respectively. To this purpose, standard procedures for separation and purification known by those skilled in the art are typically applied. Though, the present invention provides for an economical method of producing hydrogen by using hydrogen sulfide as a cheap source of hydrogen. This is particularly of interest since the production of hydrogen, e.g. by way of water electrolysis, is quite cost-intensive and hydrogen sulfide is a by-product of the oil and gas industry being abundantly available.

In another preferred embodiment of the present invention, the dielectric barrier discharge submitted to the process gas from petroleum processing is controlled by maintaining a temperature of between about 10°C and about 90°C, preferably between about 20°C and about 50°C, within the reactor. Typically an operating pressure of from about 0.5 bar to about 2 bar, preferably of about 1 bar, is maintained within the reactor.

In a preferred embodiment of the inventive apparatus, the dielectric barrier discharge reactor includes two layers of the normally solid dielectric material positioned between the first and the second electrode means. Typically, at least one layer of the normally solid dielectric material is of glass or quartz.

In further preferred embodiments of the inventive apparatus, the reactor is connected with a source capable of producing either a normally gaseous composition comprising hydrogen sulfide and methane, a natural gas composition or a process gas from petroleum processing.

Further preferred embodiments of the present invention are defined in the dependent claims.

### Brief Description of the Drawings

For a better understanding of the nature and scope of the present invention - and not to limit the invention - a preferred embodiment and details of the present invention are described in more detail in the following by reference to the drawing, in which:

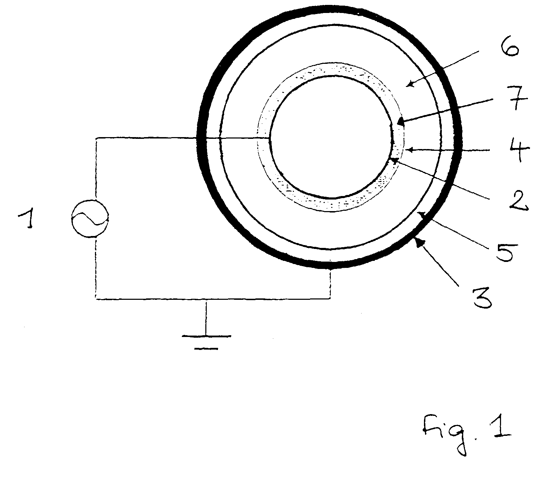

Fig. 1 is a diagrammatic cross sectional view of a preferred dielectric barrier discharge reactor configuration according to the invention;

### Detailed Description of the Drawing

The dielectric barrier discharge is a non-equilibrium discharge which occurs when alternating voltages are applied to a gas space between two electrodes separated by a non-conducting medium. The amplitude of the alternating high voltage has to be high enough to cause electrical breakdown in the gas space. Fig. 1 shows schematically a cross sectional view of a dielectric barrier discharge reactor according to the invention. A high voltage AC generator 1 is connected to a first electrode 2 and to a second grounded electrode 3 both having an essentially cylindrical form. Electrodes 2 and 3 are generally of corrosion-resistant metals or alloys or of materials covered by at least one layer of an electrically conducting substance. Typically, electrode 2 is a spiral-shaped, silver-coated copper wire, while electrode 3 is preferably of stainless steel and either a grid electrode or net-shaped. Electrode 2 forms an inner shell and electrode 3 forms an outer shell with a diameter of between about 35 mm and about 60 mm. Dielectric layer 4 and 5 have both a cylindrical form and are positioned between electrode 2 and electrode 3. Dielectric layer 4 is typically a quartz tube, while dielectric layer 5 is preferably a tube of conventional borosilicate glass. Borosilicate glass as material for the outer dielectric tube becomes particularly useful when the outer tube is additionally needed to seal the dielectric barrier discharge reactor as it is the case for the described preferred embodiment of the present invention. Another advantage of borosilicate glass compared to quartz as the dielectric material is its lower price. Generally, dielectric tube 4 and 5 both have a wall thickness of between about 0.1 mm and about 5 mm, typically between about 1.0 mm and about 3.0 mm. As already indicated, the dielectrics also serve to protect the electrodes from the corrosive H₂S.

The normally gaseous composition comprising hydrogen sulfide and at least one hydrocarbon passes through an essentially cylindrical discharge gap 6, where it is exposed to the dielectric barrier discharge. Discharge gap 6 has generally a width of between about 1.0 mm and 3.0 mm, typically of between 2.0 mm and 3.0 mm and a length of between about 0.3 m to about 3.0 m, preferably between about 1.0 m and 1.5 m. The dielectric barrier discharge is effected by an AC potential applied between electrode 2 and electrode 3; the preferred AC potential being in the range of from about 6 kV to about 100 kV and the frequency of the AC potential preferably being in the range of from about 50 Hz to about 1 MHz. Generally, an electrical power of up to about 1000 W is fed into the discharge reactor by automatically adjusting the amplitude and frequency of the applied voltage. In the preferred embodiment of the present invention quartz tube 4 serving as dielectric layer and surrounding inner electrode 2 is constructed so as to host a cooling system 7 with the aid of which the operating temperature is controlled. In the context of the present invention, it is assumed that the temperature of cooling system 7 circulating in the inner part of the double-walled quartz tube 4 is substantially the operating temperature within discharge gap 6. Thus, any operating temperature given within the present invention is correlated to the temperature of cooling system 7. Conventional cooling systems can be used for the present invention and are known by the man skilled in the art. The normally gaseous composition is generally passed through the reactor at a rate of from about 10 ml/min to about 200 ml/min, preferably from about 40 ml/min to about 120 ml/min.

When the amplitude of applied AC electric field reaches a critical value, breakdown is initiated in the gas and a current flows from one electrode to the other. Once breakdown is initiated at any location within the discharge gap, charge accumulates on the dielectric and leads to the formation of an opposite electric field. This opposite electric field reduces the external electric field within the gap and interrupts the current flow in a few nanoseconds to form microdischarges. The duration of the current pulse relates to pressure and properties of gases involved and the dielectrics applied. A large number of such microdischarges will be generated when a sufficiently high AC voltage is applied. The principal advantages of the dielectric barrier discharge are that non-equilibrium plasma conditions are established at about atmospheric pressure and that the entire electrode area is effective for discharge reactions.

An important property of the silent discharge is that many elements, i.e many dielectric-barrier discharge reactors, can be electrically linked in parallel and can be fed from a common power supply. Unlike other gas discharges, the silent discharge does not need external elements to distribute the current evenly to the individual discharge reactors. This opens up the possibility of creating large electrode areas for mass production.

### Examples

### Example 1

The feed gas, i.e. 45 Vol.-% H₂S in methane, is introduced into the system flowing downstream through the reactor. The discharge is maintained in an annular discharge gap of 2.2 mm width formed by an outer cylindrical borosilicate glass tube and an inner cylindrical quartz tube. The length of the discharge gap is about 110 mm, giving a discharge volume of about 25 ml. A grid electrode of stainless steel with a diameter of about 40 mm serves as the outer electrode, whereas a spiral-shaped silver-coated copper wire serves as the inner electrode. The operating temperature is determined by the cooling system surrounding the inner electrode and is maintained at 25°C. Further operative conditions of the dielectric barrier discharge are a flow rate of 100 ml/min implying that the content of the reactor is exchanged four times a minute, and an operating pressure of 1 bar. The applied power is varied from 60 W to 300 W using an Arcotec HS 15 as the power supply. A dielectric barrier discharge is thus initiated.

A back pressure valve at the exit of the reactor is used to adjust the pressure. A MTI (Microsensor Technology Inc., M200H) dualmodule micro gas chromatograph containing a Poraplot Q column and a molecular sieve 5A Plot column with a TCD detector and helium as the carrier gas was used to detect gaseous products. Beside methane and hydrogen sulfide only hydrogen was detected by gaschromatographic analysis; no further products were detected. The concentration of all products, i.e. CH₄, H₂S and H₂, were determined based on standard calibration procedures for these gases and gas mixtures respectively. In Example 1, however, the concentration of hydrogen was determined by substracting the measured H₂S concentration from the constant concentration of H₂S, i.e 45 Vol.-%, fed into the reactor.

Table 1 shows the influence of the electrical power on the dielectric barrier discharge of Example 1. In particular, Table 1 reports the concentrations of H₂S and H₂ as well as of CH₄ in the resulting gaseous stream when the discharge is operated with different values of electrical power. By routine, several gaschromatographic analyses were carried out while keeping the electrical power constant.

**Table 1:**

| Selective conversion of H₂S to H₂ in the presence of CH₄ varying the operative electrical power. | | | |
|---|---|---|---|
| Power [W] | H₂S measured [Vol.-%] | H₂ calcul. [Vol.-%] | CH₄ measured [Vol.-%] |
| 300 | 1.5 | 43.5 | 57.5 |
| 300 | 1.6 | 43.4 | 57.2 |
| 300 | 1.8 | 43.2 | 59.0 |
| 250 | 2.5 | 42.5 | 59.7 |
| 250 | 2.5 | 42.5 | 59.7 |
| 200 | 4.7 | 40.3 | 60.4 |
| 200 | 4.5 | 40.5 | 60.1 |
| 175 | 5.9 | 39.1 | 60.6 |
| 175 | 5.8 | 39.2 | 60.7 |
| 175 | 9.8 | 35.2 | 58.5 |
| 175 | 9.1 | 35.9 | 53.1 |
| 150 | 11.7 | 33.3 | 54.2 |
| 150 | 11.1 | 33.9 | 54.0 |
| 125 | 15.3 | 29.7 | 56.8 |
| 125 | 15.7 | 29.3 | 55.7 |
| 100 | 20.8 | 24.2 | 56.9 |
| 100 | 18.7 | 26.3 | 56.9 |
| 80 | 25.3 | 19.7 | 57.5 |
| 80 | 28.3 | 16.7 | 54.9 |
| 60 | 36.1 | 8.9 | 55.0 |
| 60 | 36.2 | 8.8 | 55.2 |

The results indicate that the content of H₂S present in methane can be reduced in accordance with the invention from 45 Vol.-% to a content of less than 2 Vol.-% when the dielectric barrier discharge is operated with an electrical power of 300 W. Moreover, the concentration of methane measured is substantially constant indicating that no substantial transformation or decomposition of methane occurred. The slight variations, in particular for the concentration of methane, are mainly caused by the difficult calibration procedures; the problems of the latter are known by the artisan.

Although certain preferred embodiments and examples of the invention have been described herein, it will be apparent to those skilled in the art to which the invention pertains that modifications and variations of the described embodiments may be made without departing from the spirit and scope of the invention.

### List of Reference Signs

- 1: high voltage AC generator
- 2: first electrode means
- 3: second electrode means
- 4: first layer of dielectric material
- 5: second layer of dielectric material
- 6: discharge gap
- 7: cooling system

## Claims

1. A method of treating a normally gaseous composition comprising hydrogen sulfide and at least one normally gaseous hydrocarbon, which method comprises the steps of:
feeding said normally gaseous composition into a reactor including a first electrode means, a second electrode means, and at least one layer of a normally solid dielectric material positioned between said first and said second electrode means;
submitting said normally gaseous composition within said reactor to a dielectric barrier discharge; and controlling said dielectric barrier discharge to effect a selective conversion of a major portion, at least, of said hydrogen sulfide into hydrogen and sulfur while minimizing transformation of said at least one normally gaseous hydrocarbon.

2. The method of claim 1 wherein said at least one normally gaseous hydrocarbon is methane.

3. The method of claim 2 wherein the content of said methane in said normally gaseous composition is higher than about 5 Vol.-%, preferably higher than about 10 Vol.-%.

4. The method of any of claims 1 to 3 wherein said normally gaseous composition further comprises carbon dioxide.

5. The method of any of claims 1 to 4 wherein said normally gaseous composition is selected from the group consisting of natural gas compositions and process gases from processing of petroleum.

6. The method of any of claims 1 to 5 wherein said dielectric barrier discharge is controlled by maintaining a temperature of between about 10°C and about 90°C, preferably between about 20°C and about 50°C, within said reactor.

7. The method of any of claims 1 to 6 wherein said dielectric barrier discharge is controlled by maintaining an operating pressure of from about 0.5 bar to about 2 bar, preferably of about 1 bar, within said reactor.

8. A method of treating a natural gas composition comprising hydrogen sulfide and at least one normally gaseous hydrocarbon, preferably methane, which method comprises the steps of:
feeding said natural gas composition into a reactor including a first electrode means, a second electrode means, and at least one layer of a normally solid dielectric material positioned between said first and said second electrode means;
submitting said natural gas composition within said reactor to a dielectric barrier discharge; and
controlling said dielectric barrier discharge to effect a selective conversion of a major portion, at least, of said hydrogen sulfide into hydrogen and sulfur while preventing transformation of said at least one normally gaseous hydrocarbon.

9. A method of treating a process gas from processing of petroleum comprising hydrogen sulfide and at least one normally gaseous hydrocarbon, preferably methane, which method comprises the steps of:
feeding said process gas into a reactor including a first electrode means, a second electrode means, and at least one layer of a normally solid dielectric material positioned between said first and said second electrode means;
submitting said process gas within said reactor to a dielectric barrier discharge; and
controlling said dielectric barrier discharge to effect a selective conversion of a major portion, at least, of said hydrogen sulfide into hydrogen and sulfur while preventing transformation of said at least one normally gaseous hydrocarbon.

10. An apparatus for treating a normally gaseous composition comprising hydrogen sulfide and at least one normally gaseous hydrocarbon; said apparatus comprising:
a dielectric barrier discharge reactor including a first electrode means, a second electrode means and at least one layer of a normally solid dielectric material positioned between said first and said second electrode means;
means for applying an AC potential between said first and said second electrode means;
means for feeding said composition into said reactor; and
means for controlling said dielectric barrier discharge to effect a selective conversion of a major portion, at least, of said hydrogen sulfide into hydrogen and sulfur while preventing transformation of said at least one normally gaseous hydrocarbon.

11. The apparatus of claim 10 wherein said dielectric barrier discharge reactor includes two layers of said normally solid dielectric material positioned between said first and said second electrode means, preferably at least one layer being of glass or quartz.
